Europäisches Patentamt

**European Patent Office**

**Office européen des brevets**

(19)

(11) Numéro de publication: **0 119 898**

**B1**

(12)

# FASCICULE DE BREVET EUROPÉEN

(45) Date de publication du fascicule du brevet:
**13.08.86**

(51) Int. Cl.⁴: **F 16 G 13/06**

(21) Numéro de dépôt: **84400398.8**

(22) Date de dépôt: **28.02.84**

(54) Chaîne mécanique comportant une garniture de frottement perfectionnée.

(30) Priorité: **04.03.83 FR 8303601**

(43) Date de publication de la demande:
**26.09.84 Bulletin 84/39**

(45) Mention de la délivrance du brevet:
**13.08.86 Bulletin 86/33**

(84) Etats contractants désignés:
**BE DE GB IT**

(56) Documents cité:
**DE-A-2 504 262**
**DE-B-1 299 959**
**FR-A-1 006 333**
**FR-A-1 344 486**
**FR-A-2 488 358**
**GB-A-213 280**
**GB-A-733 961**
**US-A-4 355 502**

(73) Titulaire: **COMPAGNIE DES TRANSMISSIONS MECANIQUES SEDIS Société dite:, 102 Rue Danton, F-92306 Levallois Perret (FR)**

(72) Inventeur: **Gaiffe, Xavier Jean- Marie, 2 bis Rue de la République Creney, F-10150 Pont Ste Marie (FR)**
Inventeur: **Sztrygler, Edgard, 7 Rue du Lieutenant Chauré, F-75020 Paris (FR)**

(74) Mandataire: **Moncheny, Michel, c/o Cabinet Lavoix 2 Place d'Estienne d'Orves, F-75441 Paris Cedex 09 (FR)**

EP 0 119 898 B1

LIBER, STOCKHOLM 1986

## Description

La présente invention est relative aux chaînes mécaniques à douilles, à rouleaux et à galets et se rapporte plus particulièrement à des garnitures de frottement du type coussinets autolubrifiants qui sont placés dans de telles chaînes.

Lors de l'engrènement des chaînes sur les pignons ou roues dentées, il se produit un glissement relatif des pièces métalliques soumises à des pressions de contact plus ou moins élevées. Les efforts parasites dus à ces frottements de glissement diminuent le rendement et on observe en outre des phénomènes de corrosion de contact dénommés fretting.

En effet, dans les chaînes actuellement existantes, les articulations des maillons entre eux se font par rotation d'un axe, le plus généralement plein, solidaire des plaques extérieures, à l'intérieur de l'alésage, d'au moins une pièce creuse, en général la douille, ces pièces étant liées rigidement à des entretoises constituant les plaques intérieures des maillons intérieurs.

Les frottements créés lors des mouvements de rotation alternés des maillons extérieurs par rapport aux maillons intérieurs se situent entre:
- l'axe et la douille
- la douille et les rouleaux pour les chaînes à rouleaux
- la douille et le pignon pour les chaînes à douilles
- la douille et le galet pour les chaînes de manutention
- les plaques intérieures et les plaques extérieures ou les plaques extérieures et la douille, en raison d'efforts latéraux parasites dus, entre autres, à des défauts d'alignement de pignons, de parallélisme entre les axes des pignons, de taillage des dentures des pignons, de parallélisme entre les axes et les douilles de la chaîne
- le rouleau et les plaques intérieures, en raison des efforts décrits précédemment.

Ces frottements sont particulièrement importants dans les cas d'utilisation où la lubrification est mal assurée ou impossible en fonction des impératifs de fonctionnement. C'est le cas dans l'énergie nucléaire, le fonctionnement dans l'eau, l'industrie textile et, fréquemment pour les chaînes de manutention, par exemple pour les chaînes d'entraînement des marches d'escaliers mécaniques ou des palettes de trottoirs roulants.

On a déjà proposé d'utiliser des garnitures de frottement en matières synthétiques disposées entre l'axe et la douille pour profiter des bonnes propriétés de frottement de certaines matières plastiques. Ces garnitures de frottement sont des coussinets tubulaires ou des garnitures fendues (FR-A-1 006 333).

On a, par ailleurs, également proposé d'utiliser des garnitures d'étanchéité placées entre les plaques intérieures et les plaques extérieures afin d'empêcher une pénétration de matières étrangères provenant de l'extérieur de la chaîne et nuisant à la rotation de l'axe à l'intérieur de la douille. Ces garnitures d'étanchéité sont constituées de coupelles élastiques prenant appui entre les plaques intérieures et les plaques extérieures et pouvant éventuellement servir de système de lubrification (DE-B-1 299 959).

Ces éléments séparés ne donnent cependant pas complètement satisfaction en ce qui concerne l'étanchéité et sont, de plus, d'une mise en oeuvre relativement complexe lors du montage de la chaîne.

La présente invention vise à remédier à ces inconvénients en fournissant en outre un dispositif grâce auquel le silence de fonctionnement des chaînes mécaniques peut être amélioré.

La présente invention a ainsi pour objet une chaîne mécanique constituée d'une succession de maillons intérieurs et de maillons extérieurs reliés entre eux par des articulations formées chacune d'un axe solidaire de deux plaques extérieures, tourillonant à l'intérieur de l'alésage d'au moins une pièce creuse solidaire de deux plaques intérieures, caractérisée en ce que les articulations comportent un ensemble de deux coussinets tubulaires à collerette disposés entre l'axe et la pièce creuse, pour le corps du coussinet, et les plaques intérieures et extérieures, pour les collerettes.

Selon une autre caractéristique de la présente invention, lorsque la chaîne comporte des rouleaux montés fous sur les pièces creuses, un ensemble de deux coussinets à collerette peut également être disposé entre les pièces creuses et le rouleau.

La pièce creuse peut être unique et est, dans ce cas, une douille sertie entre deux plaques intérieures.

Les pièces creuses peuvent également être des tétons faisant saillie vers l'intérieur des maillons et déterminant un manchon cylindrique venu de matière avec les plaques intérieures.

L'invention est exposée ci-après plus en détail à l'aide des dessins annexés, qui en représentent divers modes de réalisation. Sur ces dessins:

la Fig. 1 est une vue en plan avec coupe transversale partielle d'une articulation de chaîne munie de coussinets selon la présente invention;

la Fig. 2 est une vue en plan avec coupe transversale partielle d'une articulation de chaîne selon un autre mode de réalisation de la présente invention;

la Fig. 3 est une vue en plan avec coupe transversale partielle d'une articulation de chaîne d'un autre mode de réalisation de la présente invention comportant un rouleau;

les Fig. 4 à 8 sont des modes de réalisation particuliers du coussinet tubulaire à collerette selon la présente invention.

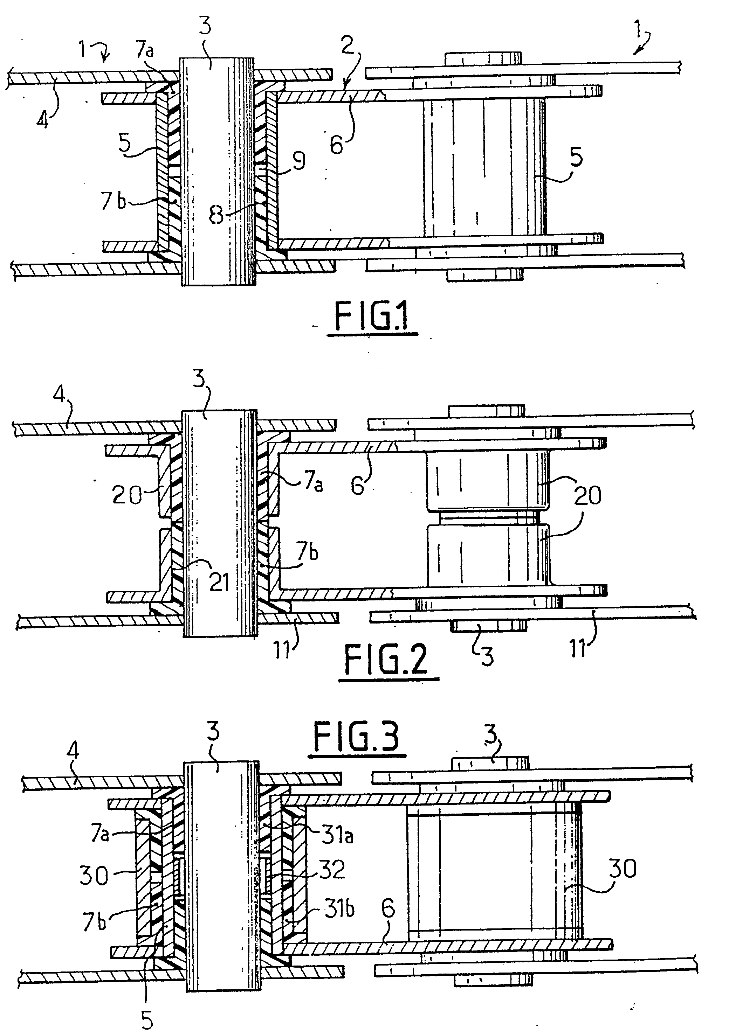

La chaîne représentée à la Fig. 1 comprend une succession de maillons extérieurs 1 et de maillons intérieurs 2, articulés autour d'un axe 3 qui est solidaire des plaques extérieures 4. L'axe 3 représenté à la Fig. 1 est un axe plein, mais il peut également s'agir d'un axe creux.

Cet axe 3 tourillonne dans une pièce creuse 5 qui est à la Fig. 1 une douille sertie entre des plaques intérieures 6.

Un ensemble de deux coussinets à collerette 7a, 7b est placé entre l'axe 3 et l'alésage 8 de la douille 5.

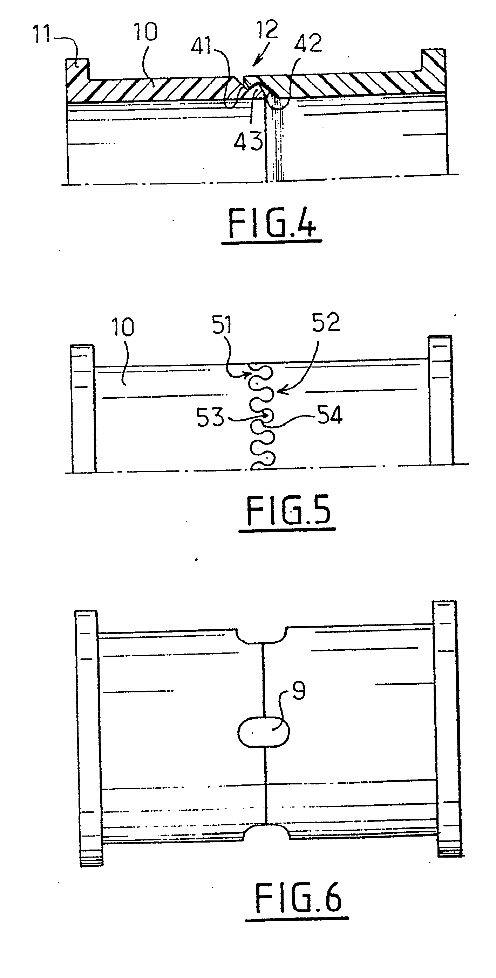

Ce coussinet à collerette, représenté plus en détail aux Fig. 4 à 8, est constitué d'un corps tubulaire 10 muni à l'une de ses extrémités d'une collerette 11 et, éventuellement, à l'autre de ses extrémités de moyens d'encliquetage 12.

Sur le mode de réalisation représenté à la Fig. 1, les coussinets à collerette 7a et 7b ont une longueur telle qu'ils ménagent, après assemblage, un espace vide 9 dans la partie médiane de l'axe.

Sur le mode de réalisation représenté à la Fig. 2, les plaques intérieures et extérieures, ainsi que l'axe, portent les mêmes références, la pièce creuse est cependant constituée de deux tétons cylindriques creux 20 venus de matière avec les plaques intérieures 6. Les coussinets à collerette 7a et 7b sont placés à l'intérieur de l'alésage 21 des tétons 20 entre ces derniers et l'axe 3.

Comme dans le mode de réalisation précédent, les collerettes 11 sont insérées entre les plaques intérieures et les plaques extérieures.

Dans le mode de réalisation de la Fig. 2, les coussinets à collerette se rejoignent dans la partie médiane de l'axe 3, mais ne comportent aucun moyen d'encliquetage, de sorte qu'ils sont simplement juxtaposés.

Au mode de réalisation représenté à la Fig. 3, la chaîne représentée est analogue à celle du mode de réalisation de la Fig. 1, mais comporte en plus un rouleau 30 qui est monté fou sur la douille 5. Un ensemble de deux coussinets à collerette 31a et 31b est placé entre la douille 5, faisant office de pièce creuse, et le rouleau 30. Les coussinets à collerette sont du même type que ceux utilisés entre l'axe et la pièce creuse aux dimensions près. Ainsi, dans le cas des coussinets à collerette disposés entre le rouleau 30 et la douille 5, la collerette 11 a un diamètre égal au diamètre extérieur du rouleau. Dans ce cas, la pièce creuse peut être indifféremment une douille 5 ou des tétons 20, comme représenté à la Fig. 2.

Dans le mode de réalisation représenté à la Fig. 3, les coussinets à collerette 7a et 7b ménagent entre eux un espace vide 9 continu tout autour de l'axe dans lequel est insérée une bague 32 limitative d'usure et ayant un diamètre extérieur égal au diamètre minimal admissible de la garniture en matière plastique pour un fonctionnement correct.

Les coussinets à collerette représentés aux Fig. 4 à 8 sont réalisés en une matière plastique permettant de répondre à un certain nombre d'exigences, qui sont l'autolubrification, la tenue aux agents atmosphériques, la tenue dans le temps, la résistance à la compression et la résistance au fluage. Parmi les matériaux particulièrement appropriés, on peut relever des polyamides 6, 6 connus sous le nom commercial de Nylon ou de Zytel, ces matières pouvant être chargées de lubrifiant. On utilise de préférence le polyamide 6, 6 chargé en bisulfure de molybdène connu sous le nom commercial de Nylatron.

On peut également utiliser comme matière plastique pour les coussinets à collerette selon la présente invention du polyoxyméthylène ou une résine acétale, en particulier le polymère thermoplastique obtenu par polymérisation de formaldéhyde (résine acétal homopolymère), connue sous le nom commercial de Delrin, chargée en lubrifiant, soit sous forme de fibres orientées de polytétrafluoréthylène, soit sous forme d'autre lubrifiant chimique.

Les coussinets à collerette selon la présente invention peuvent notamment être réalisés par moulage par injection.

Les coussinets à collerette selon la présente invention peuvent être munis de moyens d'encliquetage 12, tels que représentés à la Fig. 4, qui sont constitués de deux gorges annulaires 41 et 42 situées dans un plan radial et délimitées par des bords saillants 43, 44 qui coopèrent lors de l'assemblage.

Les moyens d'encliquetage 12 peuvent également être constitués, comme représenté à la Fig. 5, de deux dentures complémentaires 51 et 52 ayant des dents 53 arrondies dont la base 54 est étranglée, les dentures 51 et 52 s'encastrant étroitement lors de l'assemblage pour former une surface tubulaire continue entre les corps 10 respectifs des coussinets à collerette.

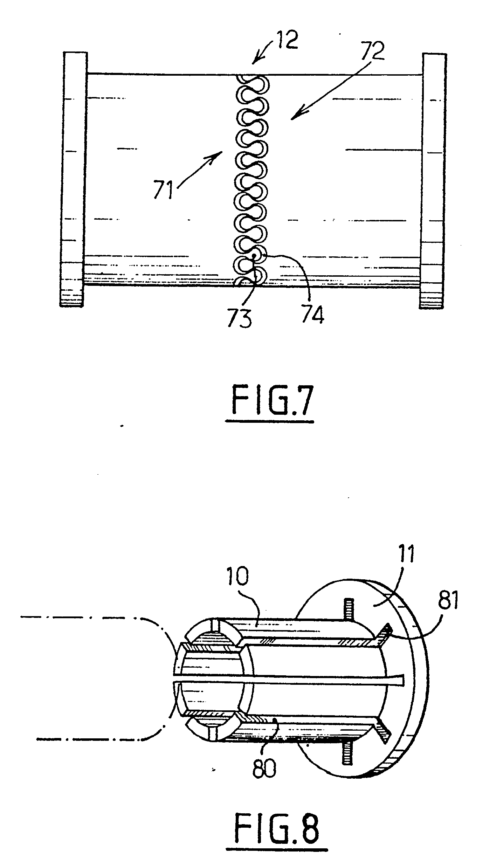

Selon le mode de réalisation représenté à la Fig. 7, les moyens d'encliquetage 12 sont constitués de deux dentures 71 et 72, rigoureusement symétriques, comme dans le cas de la Fig. 5, mais la surface 73 de la tête de la dent arrondie est inférieure à la surface 74 ménagée entre la base de deux dents adjacentes d'une même denture, de sorte que lors de l'encastrement des dentures complémentaires un espace vide est ménagé en fond de denture.

Sur le mode de réalisation représenté à la Fig. 6, les deux coussinets à collerette sont jointifs, mais comportent des alvéoles 9 déterminant des espaces vides dans la zone médiane de l'axe 3.

Ces espaces vides ménagés entre deux coussinets à collerette adjacents ont essentiellement pour fonction de servir de réserve de graisse, lors du fonctionnement de la chaîne.

Selon une variante du coussinet à collerette de la présente invention représenté à la Fig. 8, on peut ménager des fentes axiales 80 dans le corps 10 du coussinet, ces fentes 80 étant prolongées radialement dans la collerette 11 par des fentes 81. Ces fentes 80 et 81 ont également pour fonction de servir de réserve de graisse comme les espaces 9 précédemment décrits. Ces réserves de graisse sont remplies lors du montage de la chaîne avec un lubrifiant à haute performance, en particulier les qualités extrême pression et anti-oxydantes.

Une des fonctions des rainures 80 et 81 est de permettre la dilatation de la matière plastique car, en effet, les coefficients de dilatation de l'acier et des matières plastiques étant différents, il est utile de prévoir une possibilité de dilatation circonférentielle pour ne pas observer une diminution du jeu radial fonctionnellement nécessaire à la chaîne.

Les coussinets tubulaires à collerette selon la présente invention permettent d'empêcher tout glissement métal sur métal, donc tout risque de grippage, même en l'absence de lubrifiant, de diminuer le bruit de fonctionnement et d'améliorer le rendement de la chaîne.

En effet, l'absence de contact métal sur métal permet de diminuer l'usure qui entraîne un allongement de la chaîne et en perturbe le bon fonctionnement et, d'autre part, de limiter les risques de grippage entre les pièces métalliques. Le grippage, principale cause de destruction des chaînes, entraîne une accélération du phénomène d'usure, une diminution très élevée du rendement, un accroissement considérable du bruit, la création de points durs dus au blocage de l'articulation de la chaîne et pouvant entraîner la destruction de la chaîne et, éventuellement, des organes mis en mouvement par la chaîne.

Le fait que le coussinet tubulaire à collerette soit monobloc permet en outre un montage beaucoup plus facile et assure une meilleure étanchéité.

## Revendications

1. Chaîne mécanique constituée d'une succession de maillons intérieurs 12) et de maillons extérieurs (1) reliés entre eux par des articulations formées chacune d'un axe (3) solidaire de deux plaques extérieures (4), tourillonnant à l'intérieur de l'alésage d'au moins une pièce creuse (5, 20) solidaire de deux plaques intérieures (6), caractérisé en ce que les articulations comportent un ensemble de deux coussinets tubulaires à collerette (7a, 7b) disposés entre l'axe (3) et la pièce creuse pour le corps (10) du coussinet et les plaques intérieures (6) et extérieures (4) pour les collerettes (11).

2. Chaîne selon la revendication 1, caractérisée en ce que la pièce creuse est une douille (5) sertie entre deux plaques intérieures.

3. Chaîne selon la revendication 1, caractérisée en ce que les pièces creuses sont au nombre de deux et forment des tétons (20) venus de matière avec les plaques intérieures (6).

4. Chaîne selon l'une quelconque des revendications précédentes, caractérisée en ce que la chaîne comporte un rouleau (30) monté fou sur les pièces creuses (5, 20), un ensemble de deux coussinets à collerette (31a, 31b) étant également disposé entre les pièces creuses et le rouleau.

5. Chaîne selon l'une quelconque des revendications précédentes, caractérisée en ce que les coussinets à collerette (7a, 7b) montés dans les articulations se rejoignent dans la zone médiane de l'axe.

6. Chaîne selon l'une quelconque des revendications 1 à 4, caractérisée en ce que les coussinets à collerette montés dans les articulations ménagent au moins un espace vide (9) dans la partie médiane de l'axe.

7. Chaîne selon la revendication 6, caractérisée en ce que l'espace vide est continu tout autour de l'axe.

8. Chaîne selon la revendication 7, caractérisée en ce que l'espace vide (9) reçoit une bague (32) limitative d'usure ayant un diamètre exterieur égal au diamètre minimal admissible de la garniture en matière plastique.

9. Chaîne selon l'une quelconque des revendications 1 à 5, caractérisée en ce que les coussinets à collerette comportent à leur extrémité opposée à la collerette des moyens d'encliquetage (12).

10. Chaîne selon la revendication 9, caractérisée en ce que les moyens d'encliquetage sont constitués de deux gorges annulaires (41, 42) situées dans un plan radial et delimitées par des bords saillants (43, 44) coopérant lors de l'assemblage.

11. Chaîne selon la revendication 9, caractérisée en ce que les moyens d'encliquetage sont constitués de deux dentures complémentaires (51, 52) à dents (53) arrondies dont la base (54) est étranglée, s'encastrant l'une dans l'autre.

12. Chaîne selon la revendication 11, caractérisée en ce que la surface de la tête (73) de la dent arrondie est inférieure à la surface (74) ménagée entre la base de deux dents adjacentes d'une même denture, de sorte que lors de l'encastrement des dentures un espace vide est ménagé en fond de denture.

13. Chaîne selon l'une quelconque des revendications 1 à 6, caractérisée en ce que les coussinets à collerette comportent des fentes axiales.

## Patentansprüche

1. Mechanische Kette, bestehend aus einer Aufeinanderfolge innerer Kettenglieder (2) und äußerer Kettenglieder (1), welche untereinander über Gelenke verbunden sind, die jeweils aus einer fest mit zwei äußeren Platten (4) verbundenen Achse (3) gebildet sind, welche drehbar im Innern einer Bohrung mindestens eines mit zwei Innenplatten (6) fest verbundenen Hohlkörpers (5, 20) angeordnet ist, dadurch gekennzeichnet, daß die Gelenke eine Anordnung zweier rohrförmiger Lager mit Hohlkörper (10), Kragen (11) und Bund (7a, 7b) aufweisen, welche zwischen der Achse (3) und dem Hohlkörper (5, 20) des Lagers sowie den Innenplatten (6) und den Außenplatten (4) liegen.

2. Kette nach Anspruch 1, dadurch gekennzeichnet, daß der Hohlkörper (5) eine zwischen zwei Innenplatten (6) eingeschlossene Hülse ist.

3. Kette nach Anspruch 1, dadurch gekennzeichnet, daß zwei Hohlkörper vorgesehen sind, welche als einstückig mit den Innenplatten (6) verbundene Zapfen (20) ausgebildet sind.

4. Kette nach einem der vorangehenden Ansprüche, dadurch gekennzeichnet, daß die Kette eine auf den Hohlkörpern (5, 20) beweglich angebrachte Rolle (30) aufweist, wobei eine aus zwei Lagern mit Bund (31a, 31b) bestehende Anordnung zwischen den Hohkörpern und der Rolle angeordnet ist.

5. Kette nach einem der vorangehenden Ansprüche, dadurch gekennzeichnet, daß die in den Gelenken vorgesehenen Lager mit Bund (7a, 7b) im Mittelbereich der Achse aneinandergrenzen.

6. Kette nach den Ansprüchen 1 bis 4, dadurch gekennzeichnet, daß die in den Gelenken befindlichen Lager mit Bund mindestens einen freien Raum (9) im mittleren Teil der Achse bilden.

7. Kette nach Anspruch 6, dadurch gekennzeichnet, daß sich der freie Raum um die Achse herum erstreckt.

8. Kette nach Anspruch 7, dadurch gekennzeichnet, daß zur Begrenzung von Verschleißerscheinungen der freie Raum (9) der Aufnahme eines Rings (32) mit einem Außendurchmesser dient, der gleich ist dem minimal zulässigen Durchmesser einer Kunststoffauskleidung.

9. Kette nach einem der Ansprüche 1 bis 5, dadurch gekennzeichnet, daß die mit Bund versehenen Lager an ihrem dem Bund entgegengesetzten Ende Rastelemente (12) aufweisen.

10. Kette nach Anspruch 9, dadurch gekennzeichnet, daß die Rastelemente aus zwei ringförmigen Ausnehmungen (41, 42) in der radialen Ebene bestehen, welche durch hervorstehende Einfassungen (43, 44) begrenzt sind, die beim Zusammenbau ineinandergreifen.

11. Kette nach Anspruch 9, dadurch gekennzeichnet, daß die Rasteinrichtungen von zwei zusammenwirkenden Ausnehmungen (51, 52) mit gerundeten Zähnen (53) gebildet sind, deren Basis (54) eine Einschnürung aufweist, so daß ein Ineinandergreifen ermöglicht wird.

12. Kette nach Anspruch 11, dadurch gekennzeichnet, daß die Oberseite des Kopfes (73) des grundeten Zahns unterhalb der Oberfläche (74) zwischen der Basis zweier nebeneinanderliegender Zähne einer gleichen Zahnung liegt, so daß beim Ineinandergreifen der Zahnungen ein Hohlraum am Grund der Zahnung gebildet wird.

13. Kette nach einem der Ansprüche 1 bis 6, dadurch gekennzeichnet, daß die mit Bund versehenen Lager axiale Einschnitte aufweisen.


**Claims**

1. A mechanical chain constituted by a succession of inner links (2) and outer links (1) interconnected by articulations each formed by a pin (3) connected to two outer plates (4), journalled inside the bore of at least one hollow member (5, 20) connected to two inner plates (6), characterised in that the articulations comprise an assembly of two tubular flanged bushes (7a, 7b) disposed between the pin (3) and the hollow member for the body (10) of the bush and the inner plates (6) and outer plates (4) for the flanges (11).

2. A chain according to claim 1, characterised in that the hollow member is a sleeve (5) set between two inner plates,

3. A chain according to claim 1, characterised in that the hollow members are two in number and form spigots (20) in one piece with the inner plates (6).

4. A chain according to any one of the preceding claims, characterised in that the chain comprises a roller (30) freely rotatable on the hollow members (5, 20), an assembly of two flanged bushes (31,a, 31b) being also disposed between the hollow members and the roller.

5. A chain according to any one of the preceding claims, characterised in that the flanged bushes (7a, 7b) mounted in the articulations are in adjoining relation in the median zone of the pin.

6. A chain according to any one of the claims 1 to 4, characterised in that the flanged bushes mounted in the articulations define at least one empty space (9) in the median part of the pin.

7. A chain according to claim 6, characterised in that the empty space is continuous completely around the pin.

8. A chain according to claim 7, characterised in that the empty space (9) receives a wear-limiting ring (32) having an outside diameter equal to the minimum allowable diameter of the lining of plastics material.

9. A chain according to any one of the claims 1 to 5 characterised in that the flanged bushes have at their end opposed to the flange means (12) capable of clipping together.

10. A chain according to claim 9, characterised in that the clipping means are constituted by two annular grooves (41, 42) located in a radial plane and defined by projecting edge portions (43, 44) which cooperate upon assembly.

11. A chain according to claim 9, characterised in that the clipping means are constituted by two complementary sets of teeth (51, 52) whose teeth (53) are rounded and have a narrow base (54) which fit one inside the other.

12. A chain according to claim 11, characterised in that the area of the head (73) of the rounded tooth is less than the area (74) provided between the base of two adjacent teeth of the same set of teeth, so that, upon interengagement between the sets of teeth an empty space is provided at the bottom of the teeth.

13. A chain according to any one of the claims 1 to 6, characterised in that the flanged bushes include axial slots.

_FIG.1_

_FIG.2_

_FIG.3_

0 119 898

FIG.4

FIG.5

FIG.6

3

FIG.7

FIG.8